# EUROPEAN PATENT APPLICATION

(11) **EP 0 790 118 A2**
(43) Date of publication of application: **20.08.1997**
(21) Application number: 97102215.7
(22) Date of filing: 12.02.1997
(51) Int. Cl.: B29C 55/22

(54) **Method of producing a container for a haemodialysis filter**

(30) Priority: 14.02.1996 IT BO960067
(71) Applicant: BELLCO S.p.A., I-41037 Mirandola (IT)
(72) Inventor: Graglia, Sergio, 13040 Saluggia (IT)
(74) Representative: Jorio, Paolo

(57) **Abstract**

A method of producing a container for a haemodialysis filter, and which includes: injection molding a basic tubular container (1) made of plastic material and having a central body (2), two axial end portions (3) in which are formed first axial orifices (3a), and two second orifices (11) formed at the axial end portions (3) and perpendicular to the longitudinal axis of the central body (2); heating a central portion of the central body (2) to such a temperature as to plasticize the material; inserting the central portion of the central body (2) inside a tubular mold (24); sealing some of the orifices (3a and/or 11) and blowing compressed air through the other orifices (3a and/or 11) into the tubular basic container (1); and subjecting the central body (2) to traction, to form a final container (22) having a central body (32) of an axial length greater than that of the central body (2) of the basic container (1).

## Description

The present invention relates to a method of producing a container for a haemodialysis filter.

As is known, a haemodialysis filter is a member in which to purify blood, and comprises a tubular container made of plastic material and enclosing a predetermined number of capillary fibers of a thin semipermeable membrane with microscopic holes. The container comprises an inlet for extracorporeal blood, which is circulated through the fibers; an outlet for extracorporeal blood; an inlet for a dialysis solution, which is circulated outside the fibers; and an outlet for the dialysis solution.

To cater more easily to the demands of different patients, currently manufactured haemodialysis filters differ as regards the number of fibers enclosed in the container, and hence the surface area of the membrane through which the impurities in the blood pass into the dialysis solution. The reason for this lies in the fact that, generally speaking, the required surface area of the membrane is proportional to the body surface of the patient undergoing dialysis. To increase the surface area of the membrane, it is therefore necessary to increase the volume of the container by either increasing its length or diameter. Since, over and above a given value, increasing the diameter fails to bring about a proportional increase in filtering capacity, the tendency among manufacturers is to produce filters with containers of different lengths, which, being injection molded, require the use of a number of molds, one for each container length. As is known, the high cost of such molds increases the end cost of the filter; and, on account of the injection molding method used, the inside diameter of the center section and hence the capacity of the container are inversely proportional to its length.

It is an object of the present invention to provide a method of producing a container for a haemodialysis filter from a basic container of shorter length, to enable containers of different lengths to be produced using one mold.

According to the present invention, there is provided a method of producing a container for a haemodialysis filter, characterized by:
injection molding a basic tubular container made of plastic material and having a central body, two axial end portions in which are formed respective first axial orifices, and two second orifices formed at said end portions and perpendicular to the longitudinal axis of said central body;
heating, by means of a first device, a central portion of said central body to such a temperature as to plasticize the material of said central portion of said central body;
inserting said central portion of said central body inside a tubular mold;
sealing some of said orifices via first means, and blowing compressed air through the remaining said orifices into said basic container by means of a second device; and
subjecting said central body to traction via second means, to form a final container having a central body of an axial length greater than that of said central body of said basic container.

A preferred embodiment of the present invention will be described by way of example with reference to the accompanying drawings, in which:
Figure 1 shows a partially sectioned view of a basic container for a haemodialysis filter;
Figure 2 shows a partially sectioned view of a container of greater axial length than that in Figure 1;
Figure 3 shows a diagram of a system for producing the Figure 2 container.

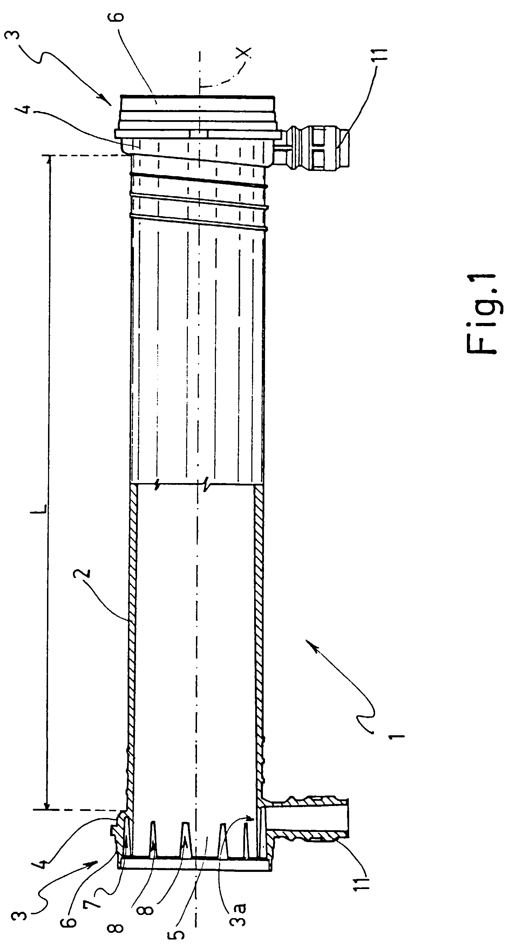

Number 1 in Figure 1 indicates a basic container for a haemodialysis filter, and which is injection molded in known manner from preferably transparent plastic material. A haemodialysis filter is a member in which to purify extracorporeal blood of a user undergoing dialysis treatment, and comprises container 1 and a number of capillary fibers of a thin semipermeable membrane (not shown) fitted inside container 1.

With reference to Figure 1, container 1 is tubular with a longitudinal axis X, and comprises a tubular central body 2 of axis X and axial length L. Central body 2 has a substantially constant outside diameter, and an inside diameter decreasing slightly from the axial ends to the center section, which slight internal tapers are due to the type of process by which container 1 is formed. As is known, in fact, injection molding is performed using two positive molds about which body 2 is formed, and which are slightly truncated-cone-shaped to enable easy withdrawal from the molded body 2.

Container 1 comprises two axial end portions 3 coaxial with and forming one piece with body 2. End portions 3 define respective orifices 3a, and each comprise a respective tubular body 4 with an inside diameter substantially equal to that of the axial ends of body 2, and an outside diameter greater than that of body 2. Two annular elements 5 and 6 extend coaxially outwards from and in one piece with each body 4; element 5 is located inside element 6 with which it defines an annular gap 7; and inner element 5 comprises a number of equally spaced axial notches 8 to form a number of axial teeth. Two orifices 11, one for the inflow and the other for the outflow of a dialysis solution, extend in one piece from respective bodies 4 and perpendicular to axis X.

Container 1 is normally provided with two known axial closing members (not shown), each of which comprises a closing plate defined substantially in a plane perpendicular to axis X, and having a central orifice of axis X for channeling extracorporeal blood.

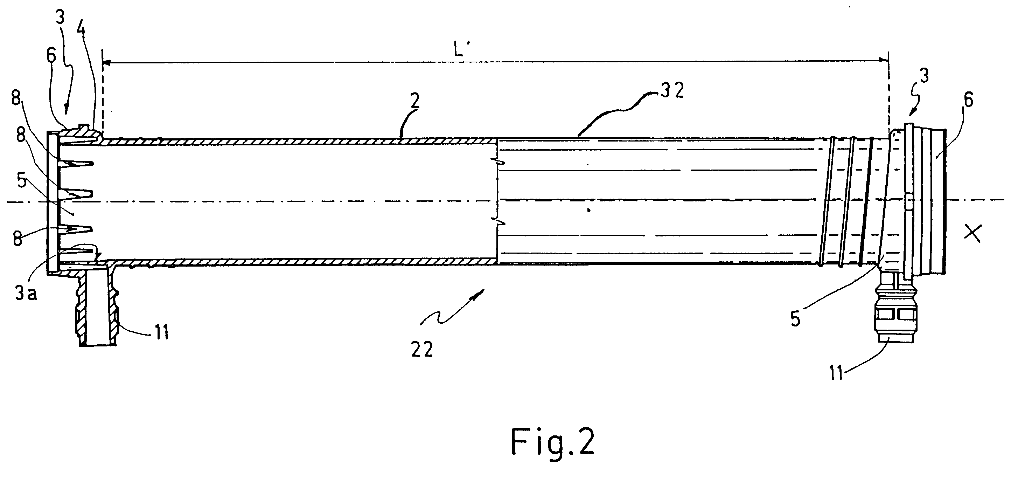

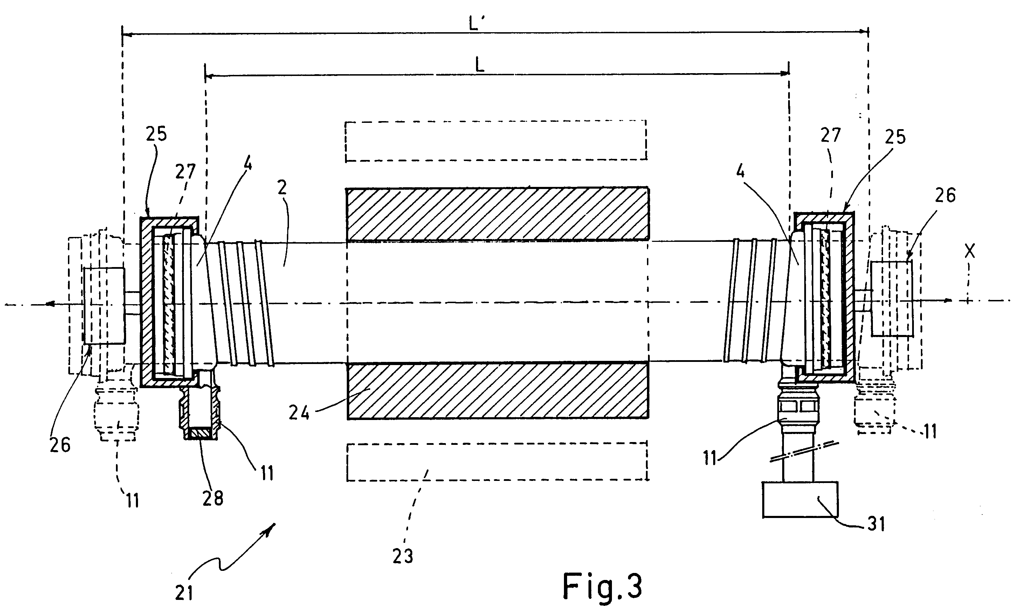

Number 21 in Figure 3 indicates a system for producing from container 1 a container 22 (Figure 2), which substantially differs from container 1 by being axially longer. System 21 comprises a heating device 23; a tubular mold 24 with an inside diameter substantially equal to the outside diameter of body 2; two gripping members 25 for gripping the axial ends of container 1; means 26 for moving the two gripping members 25 in opposite directions, and more specifically outwards of container 1 to exert pull on body 2; two plugs 27 for sealing orifices 3a; a plug 28 for sealing one of orifices 11; and a device 31 for blowing compressed air into container 1 through the other orifice 11.

The method according to the teachings of the present invention comprises:
injection molding container 1;
heating the central portion of central body 2, by means of device 23, to such a temperature as to plasticize the material of the central portion of body 2;
inserting the central portion of body 2 inside mold 24;
sealing orifices 3a and one of orifices 11 by means of plugs 27 and 28;
fitting gripping members 25 to end portions 3;
blowing compressed air into container 1 through the other orifice 11 by means of device 31; and
drawing end portions 3 a predetermined distance apart via means 26, and so exerting pull on central body 2.

The axial length of mold 24 is shorter than that of central body 2 and longer than the heated portion of body 2. In the course of the above process, the central portion of body 2 softens when heated, so that, when compressed air is blown in and pull exerted on body 2, the film defined by the material of the heated portion presses against the inner surface of mold 24, and the axial length of the central portion is simultaneously increased to form container 22, which comprises a central body 32 of axial length L' greater than axial length L of body 2 of container 1, with no added material required. The central portion of body 32 has the same outside diameter as mold 24 and hence body 2, and the center section of body 32 has a larger inside diameter than body 2 of container 1.

Container 1 is made of plastic material, in particular thermoplastic resin, such as polycarbonate, polyester, ABS, polyamide, polymethylmethacrylate, polypropylene, polymethylpentene, polyetherimide, polysulfone, etc. Body 2 is heated to a temperature of 170-200°C if polycarbonate is used, and to 140-250°C using other transparent resins.

The advantages of the present invention will be clear from the foregoing description.

In particular, one injection mold is used to produce a basic container, which in itself may be used for a haemodialysis filter, and from which, using the method described above, further containers of greater axial length may be produced with no added material required. Moreover, the method described provides for selecting the final axial length, and the increase in axial length is accompanied by an increase in the inside diameter of the center section so that the capacity of the container is in no way impaired.

Clearly, changes may be made to the method as described and illustrated herein without, however, departing from the scope of the present invention.

In particular, compressed air may be blown in through both orifices 11 or through one or both of orifices 3a. Moreover, using the method described above, underside recesses, not achievable using traditional methods, may be formed in central body 2. That is, by appropriately altering the shape of the inner surface of mold 24, body 32 may be so shaped as to improve the efficiency of the haemodialysis filter. In short, a product is produced using a method which combines the advantages of both injection molding (accurate size and shape) and blow molding (light weight and no limitation as to the shapes that can be produced).

## Claims

1. A method of producing a container for a haemodialysis filter, characterized by:
injection molding a basic tubular container (1) made of plastic material and having a central body (2), two axial end portions (3) in which are formed respective first axial orifices (3a), and two second orifices (11) formed at said end portions (3) and perpendicular to the longitudinal axis of said central body (2);
heating, by means of a first device (23), a central portion of said central body (2) to such a temperature as to plasticize the material of said central portion of said central body (2);
inserting said central portion of said central body (2) inside a tubular mold (24);
sealing some of said orifices (3a and/or 11) via first means (27 and 28), and blowing compressed air through the remaining said orifices (3a and/or 11) into said basic container (1) by means of a second device (31); and
subjecting said central body (2) to traction via second means (26), to form a final container (22) having a central body (32) of an axial length greater than that of said central body (2) of said basic container (1).

2. A method as claimed in Claim 1, characterized by increasing the axial length of said central body (2) of said basic container (1), and at the same time increasing the inside diameter of the center section of said central body (2) of said basic container (1).

3. A method as claimed in Claim 2, characterized by forming said central body (32) of said final container (22) with an outside diameter substantially equal to the outside diameter of said central body (2) of said basic container (1).

4. A method as claimed in any one of the foregoing Claims, characterized in that said basic container (1) is formed by injection molding thermoplastic resins.

5. A method as claimed in Claim 4, characterized in that said basic container (1) is made of transparent plastic material.

6. A method as claimed in Claim 5, characterized in that said basic container (1) is formed by injection molding polycarbonate.

7. A method as claimed in Claim 6, characterized by heating said central portion of said central body (2) of said basic container (1) to a temperature of 170°C to 200°C by means of said first device (23).

8. A method as claimed in Claim 5, characterized in that said basic container (1) is formed by injection molding a resin selected from among: polyester, ABS, polyamide, polymethylmethacrylate, polypropylene, polymethylpentene, polyetherimide, polysulfone.

9. A method as claimed in Claim 8, characterized by heating said central portion of said central body (2) of said basic container (1) to a temperature of 140°C to 250°C by means of said first device (23).
